# EUROPEAN PATENT APPLICATION

(11) **EP 4 675 347 A1**
(43) Date of publication of application: **07.01.2026**
(21) Application number: 25183727.4
(22) Date of filing: 18.06.2025
(51) Int. Cl.: G02F 1/167, G06F 3/14, G09G 3/34

(54) **DISPLAY DEVICE**

(30) Priority: 04.07.2024 JP 2024107838
(71) Applicant: Alps Alpine Co., Ltd., Ota-ku, Tokyo 145-8501 (JP)
(72) Inventor: Sekime, Tomoaki, Iwaki-city Fukushima (JP)
(74) Representative: Schmitt-Nilson Schraud Waibel Wohlfrom Patentanwälte Partnerschaft mbB

(57) **Abstract**

A display device includes a first display unit having a plurality of openings, the first display unit being configured to switch between black and a predetermined pattern in response to application of a voltage; a second display unit disposed adjacent to a rear side of the first display unit at a position where display contents are visible through the plurality of openings; and a switching unit configured to switch the first display unit to black display when the second display unit is turned on, and to switch the first display unit to a display state of the pattern when the second display unit is turned off.

## Description

The present disclosure relates to a display device that allows a predetermined pattern to be visible when not in use.

There has long been a demand for eliminating the presence of in-vehicle displays, and as a display device that satisfies such a demand, a display device is known that provides necessary visual information by the display when the display device is in use, and is designed to appear absent when not in use, so as not to detract from the aesthetic appearance around the mounting area (e.g., see JP 2001-331132 A). In this display device, a screen printed in the same woodgrain color and pattern as those of the surrounding woodgrain panel is used. When in use, an image is displayed by transmitting light from the display forward through a large number of micropores of the screen, and when not in use, the woodgrain color and pattern on the screen is visible.

JP 2001-331132 A discloses a description indicating that when the display device is in use, the color and pattern of the screen become invisible due to being overpowered by the brightness of the display light transmitted through the micropores, and therefore the presence of the screen does not visually interfere in any way, and the image on the display can be viewed with no distraction from the presence of the screen. However, in practice, the luminance of each portion of the image on the display varies depending on the display contents, and therefore, the woodgrain color and pattern cannot be made completely invisible in a dark region.

The present disclosure has been made in view of the above points, and it is desirable to provide a display device capable of reliably making the color and pattern on the surface visible when not in use and invisible when in use.

The present disclosure relates to a display device according to the appended claims. Embodiments are disclosed in the dependent claims.

According to an aspect of the present disclosure, a display device is provided. The display device includes:
a first display unit having a plurality of openings, the first display unit being configured to switch between black and a predetermined pattern in response to application of a voltage;
a second display unit disposed adjacent to a rear side of the first display unit at a position where display contents are visible through the plurality of openings; and
a switching unit configured to switch the first display unit to black display when the second display unit is turned on, and to switch the first display unit to a display state of the pattern when the second display unit is turned off.

Since the first display unit is displayed in black while the second display unit is displaying an image, the pattern when the display device is not in use (when the second display unit is not turned on) can be reliably prevented from being visible when the display device is in use (when the second display unit is turned on).

The first display unit is preferably electronic paper, and the display state of the pattern is preferably maintained when the application of the voltage is stopped. This makes it possible to reduce power consumption in a state where the predetermined pattern is visible when the display device is not in use.

The pattern is preferably a woodgrain pattern. This makes it possible to reliably conceal the unnecessary patterns invisible when the screen is displayed, and achieve a woodgrain appearance when the screen is not displayed, thereby creating a luxurious aesthetic.

It is also preferable that the first display unit is disposed so as to overlap a black matrix of the second display unit, thereby enabling a pattern to be displayed when not in use without reducing the area of the screen display.

Other objects and further features of the present invention will be apparent from the following detailed description when read in conjunction with the accompanying drawings, in which:
FIG. 1 is a diagram illustrating a configuration of a video display device according to an embodiment.
FIG. 2 is a diagram illustrating a positional relationship between an electronic paper and a display panel according to an embodiment.
FIGS. 3A and 3B are diagrams each illustrating an exemplary display state of the electronic paper.
FIG. 4 is a flowchart illustrating an operation procedure for switching display contents of the electronic paper according to an embodiment.
   FIGS. 5A and 5B are diagrams each illustrating a display state of another electronic paper having a different driving system according to an embodiment.

In the following, embodiments of the present invention will be described with reference to the accompanying drawings. In the specification and drawings, elements having substantially the same functions or configurations are denoted with the same numerals, and duplicate description thereof is omitted.

An image display device according to embodiments of the present disclosure will be described below with reference to the accompanying drawings.

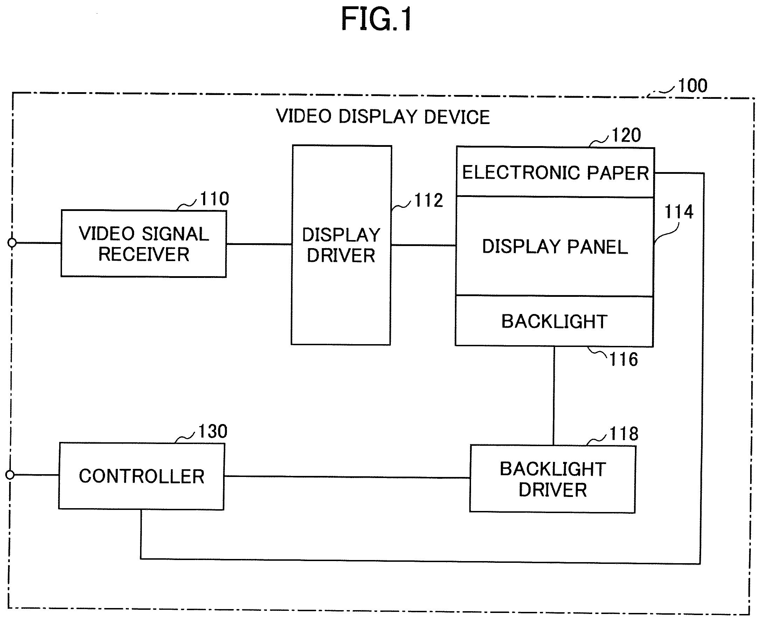

FIG. 1 is a diagram illustrating a configuration of a video display device according to an embodiment. A video display device 100 illustrated in FIG. 1 is incorporated in, for example, a head unit installed in a vehicle, which is disposed in a dashboard and displays images based on video signals output from a head unit main body (not illustrated). Note that such a usage form is an example, and the video display device 100 may be used in a form separated from the head unit main body or may be used for a purpose other than the head unit or the vehicle.

The video display device 100 includes a video signal receiver 110, a display driver 112, a display panel 114, a backlight 116, a backlight driver 118, an electronic paper 120, and a controller 130.

The video signal receiver 110 receives a video signal in a low voltage differential signaling (LVDS) format input from the head unit main body via a video input terminal, performs serial/parallel conversion, and outputs a video signal in an RGB format.

The display driver 112 drives the display panel 114 based on the video signal in the RGB format output from the video signal receiver 110, and displays an image indicated by the video signal. The display panel 114 is, for example, a color liquid crystal display panel, and is assembled in a state of facing the backlight 116 that illuminates from the rear surface. The backlight 116 is made of, for example, an LED, and a drive voltage is controlled by the backlight driver 118 in a pulse width modulation (PWM) manner so as to have a predetermined brightness.

The electronic paper 120 is capable of switching between black and a predetermined pattern in response to application of a voltage. The electronic paper 120 is disposed so as to overlap a surface of the display panel 114.

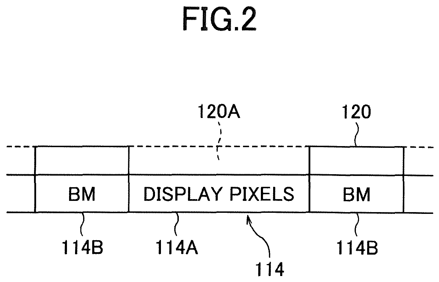

FIG. 2 is a diagram illustrating a positional relationship between the electronic paper 120 and the display panel 114 according to an embodiment. The electronic paper 120 is arranged on the display panel 114 and has a plurality of openings 120A. The plurality of openings 120A correspond to respective display pixels 114A of the display panel 114, and a user can view the respective display pixels 114A of the display panel 114 through the openings 120A. The electronic paper 120 is disposed so that a portion thereof except for the openings 120A overlap with a black matrix (BM) 114B of the display panel 114.

The controller 130 controls the entire video display device 100. The controller 130 is connected to the head unit main body via a communication terminal, and transmits and receives various data to and from the head unit main body by communication according to, for example, a controller area network (CAN) protocol.

The controller 130 switches the display contents of the electronic paper 120 in conjunction with the image display operation using the display panel 114. For example, the driving voltage is applied so that the screen of the electronic paper 120 is black during image display (when in use or when turned on) using the display panel 114. On the other hand, after the end or before the start of image display using the display panel 114 (when not in use or when not turned on), a drive voltage is applied so that the screen of the electronic paper 120 has a predetermined pattern (e.g., a woodgrain color and pattern). Note that the electronic paper 120 has a memory property of retaining the display contents until then even when the voltage application is stopped, and thus the application of the drive voltage is stopped after the display is switched to black or a predetermined pattern.

The electronic paper 120 corresponds to a first display unit; the display panel 114, the backlight 116, and the backlight driver 118 correspond to a second display unit; and the controller 130 corresponds to a switching unit. The switching unit is an electronic circuit, such as a central processing unit (CPU), a field programmable gate array (FPGA), an application specific integrated circuit (ASIC), or the like, and are configured to execute various processes described in the present specification by executing instruction codes stored in a memory or by being designed as a circuit for specific applications.

The video display device 100 according to embodiments has the above-described configuration. Next, an operation of switching the display contents of the electronic paper 120 in response to turning on or turning off of the display panel 114 will be described.

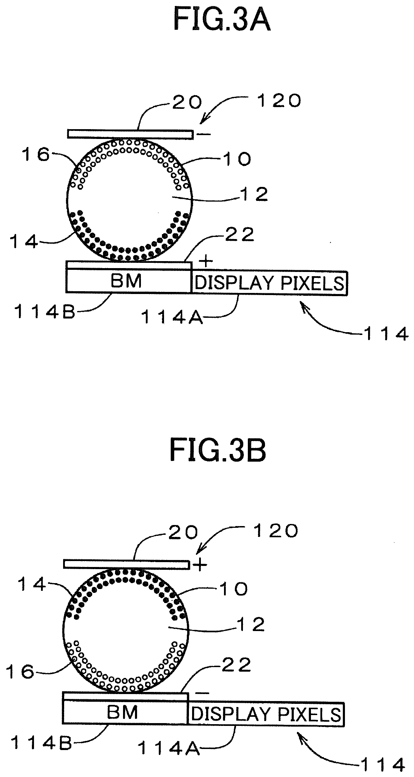

FIGS. 3A and 3B are diagrams illustrating a display state of the electronic paper 120 according to an embodiment. For example, FIGS. 3A and 3B are examples using the electrophoresis. FIG. 3A illustrates a display state of the display panel 114 when the display panel 114 is not turned on, and FIG. 3B illustrates a display state of the display panel 114 when the display panel 114 is turned on.

In the electronic paper 120, oil 12 is sealed in a microcapsule 10, and the oil 12 contains black particles 14 negatively charged (minus), and particles 16 positively charged (plus) and having a color necessary for drawing a predetermined pattern such as a woodgrain pattern. Two pixel electrodes 20 and 22 are arranged with the microcapsule 10 interposed between the two pixel electrodes 20 and 22.

In a state where the display panel 114 is not turned on, when a voltage is applied so that the pixel electrode 20 arranged on the user side is negative (minus) and the pixel electrode 22 on the opposite side is positive (plus) (FIG. 3A), the positively charged particles 16 move to the surface (user side), and thus a predetermined pattern is visible to a user. Such application of voltage is necessary for moving the particles 14 and 16, and a the application of voltage is stopped thereafter, the displayed pattern such as a woodgrain pattern is maintained.

In contrast, in a state where the display panel 114 is turned on, when a voltage is applied so that the pixel electrode 20 arranged on the user side is positive (plus) and the pixel electrode 22 on the opposite side is negative (minus) (FIG. 3B), the negatively charged black particles 14 move to the surface (user side), and thus the display panel becomes black and the user cannot see the predetermined pattern. The black color is the same color as the black matrix of the display panel 114, and only the color of the display pixels 114A of the display panel 114 is visible to the user. Such application of voltage is necessary for moving the particles 14 and 16, and even when the application of voltage is stopped thereafter, the displayed black color is maintained.

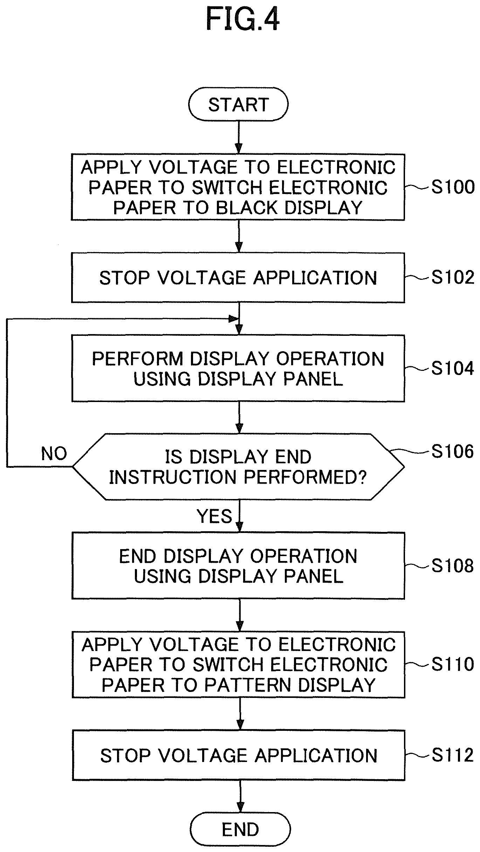

FIG. 4 is a flowchart illustrating an operation procedure for switching the display contents of the electronic paper 120 according to an embodiment. Before the video display device 100 is powered on (i.e., when the display panel 114 is not turned on), the electronic paper 120 maintains a display state in which the screen has a predetermined pattern such as a woodgrain pattern.

When the video display device 100 is powered on and starts operating, the controller 130 applies a voltage to the electronic paper 120 to switch the electronic paper 120 to black display (step S100), as illustrated in FIG. 3B. After the switching, the voltage application is stopped (step S102). Thereafter, a display operation using the display panel 114 is performed (step S104).

In parallel with the display operation, the controller 130 determines whether or not a display end instruction (e.g., a power disconnection operation or the like) is performed (step S106). When the display end instruction is not performed, negative determination is made, and the process returns to step 104 to continue the display operation. When the display end instruction is performed, affirmative determination is made in the determination of step 106, and the display operation using the display panel 114 is ended (step S108).

Next, the controller 130 applies a voltage to the electronic paper 120 as illustrated in FIG. 3A to switch the electronic paper 120 to a pattern display such as a wood grain pattern (step S110). After the switching, the voltage application is stopped (step S112).

As described above, in the video display device 100, the electronic paper 120 is displayed in black while an image is displayed on the display panel 114, and therefore, it is possible to reliably prevent a pattern when the video display device 100 is not in use from being visible when the video display device 100 is in use.

Further, since the electronic paper 120 can maintain a display state of black color or a display state of the pattern when the application of voltage is stopped, it is possible to reduce power consumption in the display state of the pattern when the video display device 100 is not in use.

Further, by displaying a woodgrain pattern when the video display device 100 is not in use, it is possible to create a luxurious aesthetic when the video display device 100 is not in use.

Further, since the electronic paper 120 is arranged to overlap the black matrix 114B of the display panel 114, it is possible to display a pattern when the video display device 100 is not in use without reducing the display area of the display panel 114.

The present disclosure is not limited to the above-described embodiments, and various modifications may be made within the scope of the claims. In the above-described embodiments, as illustrated in FIGS. 3A and 3B, a driving system in which the particles 14 and the like are moved by an electric field in a direction perpendicular to the display surface of the electronic paper 120 is used, but an electronic paper using another driving system may be used as long as the particles 14 and the like can be moved.

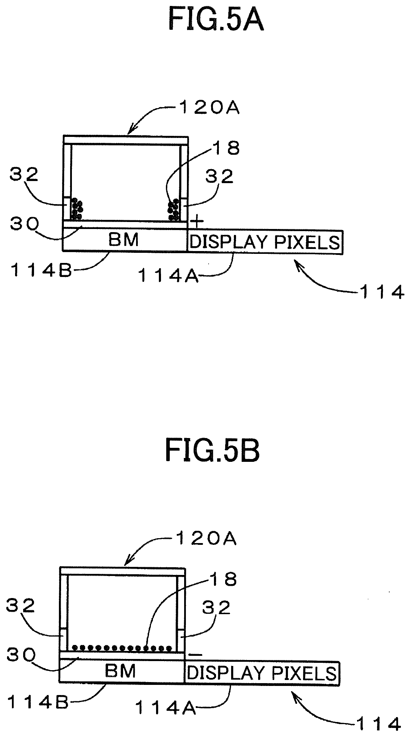

FIGS. 5A and 5B are diagrams each illustrating a display state of another electronic paper 120 having a different driving system according to an embodiment. For example, FIGS. 5A and 5B are examples using the electrophoresis, FIG. 5A illustrates a display state of the display panel 114 when the display panel 114 is not turned on, and FIG. 5B illustrates a display state of the display panel 114 when the display panel 114 is turned on. Pixel electrode 30 are arranged along a black matrix 114B of the display panel 114, and common electrodes 32 are arranged at the ends of the pixel electrodes 30.

In a state where the display panel 114 is not turned on, when a voltage is applied so that the pixel electrode 30 is positive (plus) with respect to the common electrodes 32 (FIG. 5A), the positively charged black particles 18 move toward the common electrodes 32 in the horizontal direction. For example, a predetermined pattern is drawn on the pixel electrodes 30, or the pixel electrodes 30 are made of a transparent electrode so as to expose the pattern underneath, so that the pattern is visible by the user. The application of such a voltage is necessary for moving the particles 18, and even when the application of the voltage is stopped thereafter, the displayed pattern such as a woodgrain pattern is maintained.

In contrast, in a state where the display panel 114 is turned on, when a voltage is applied so that the pixel electrode 30 is negative (minus) with respect to the common electrodes 32 (FIG. 5B), the positively charged black particles 18 move to the surface of the pixel electrode 30, and thus the display panel becomes black and the predetermined pattern is not visible by the user. The black color is the same color as the black matrix of the display panel 114, and only the color of the display pixels 114A of the display panel 114 is visible to the user. Such application of voltage is necessary for moving the particles 18, and even when the application of voltage is stopped thereafter, the displayed black color is maintained.

In the above-described embodiments, the pattern such as a woodgrain pattern is displayed by devising the color of the particles 16, but for example, a pattern of a specific color may be displayed through a color filter.

In the above-described embodiments, the case where the electrophoretic electronic paper 120 is used has been described, but electronic paper of another driving system, for example, an electronic liquid powder system may be used.

As described above, according to the present disclosure, since the first display unit (electronic paper 120) displays black while the second display unit (display panel 114) displays an image, it is possible to reliably prevent a pattern such as a woodgrain pattern from being visible while the image is being displayed.

Although the present invention has been described with reference to embodiments, the present invention is not limited to the configurations and elements described in the embodiments, and the configurations and the elements described in the embodiments may be combined with other configurations and elements, and the above-described embodiments can be changed as appropriate without departing from the scope of the claimed subject matter.

## Claims

1. A display device comprising:
a first display unit having a plurality of openings, the first display unit being configured to switch between black and a predetermined pattern in response to application of a voltage;
a second display unit disposed adjacent to a rear side of the first display unit at a position where display contents are visible through the plurality of openings; and
a switching unit configured to switch the first display unit to black display when the second display unit is turned on, and to switch the first display unit to a display state of the pattern when the second display unit is turned off.

2. The display device according to claim 1, wherein the first display unit is an electronic paper configured to maintain the display state of the pattern when the application of the voltage is stopped.

3. The display device according to claim 1 or 2, wherein the pattern is a woodgrain pattern.

4. The display device according to one of claims 1 to 3, wherein the first display device is disposed so as to overlap a black matrix of the second display unit.
